# EUROPÄISCHE PATENTANMELDUNG

(11) **EP 4 275 866 A1**
(43) Veröffentlichungstag der Anmeldung: **15.11.2023**
(21) Anmeldenummer: 23165227.2
(22) Anmeldetag: 29.03.2023
(51) Int. Cl.: B29C 49/78, G01N 21/88, G01N 21/90, B29L 31/00

(54) **VERFAHREN UND VORRICHTUNG ZUR HERSTELLUNG VON KUNSTSTOFFBEHÄLTNISSEN MIT ZONENWEISER INSPEKTION VON KUNSTSTOFFVORFORMLINGEN**

(30) Priorität: 09.05.2022 DE 102022111523
(71) Anmelder: Krones AG, 93073 Neutraubling (DE)
(72) Erfinder: Forsthoevel, Jochen, 93073 Neutraubling (DE); Aust, Robert, 93073 Neutraubling (DE); Schober, Stefan, 93073 Neutraubling (DE)
(74) Vertreter: Hannke Bittner & Partner mbB Regensburg

(57) **Zusammenfassung**

Verfahren zur Evaluierung von Kunststoffvorformlingen (10), wobei diese Kunststoffvorformlinge dazu bestimmt sind, von einer Erwärmungseinrichtung erwärmt zu werden und anschließend von einer Umformungseinrichtung durch Beaufschlagung mit einem fließfähigen Medium zu Kunststoffbehältnissen expandiert zu werden, wobei die Kunststoffvorformlinge (10) sich in einer Längsrichtung erstrecken und in dieser Längsrichtung mehrere Abschnitte (10a, 10b, 10c) aufweisen, wobei diese mehreren Abschnitte zumindest einen Gewindeabschnitt (10a), einen Grundkörperabschnitt (10b) und einen Bodenabschnitt (10c) aufweisen, wobei wenigstens der Grundkörperabschnitt (10b) und der Bodenabschnitt (10c) inspiziert werden, dadurch gekennzeichnet, dass für eine Materialqualität der Kunststoffvorformlinge (10) charakteristische Werte ausgegeben werden wobei diese Werte unterschiedlichen Abschnitten (10a, 10b, 10c) zugeordnet werden und/oder wobei bei der Auswertung dieser charakteristischen Werte wenigstens eine Eigenschaft des herzustellenden Behältnisses berücksichtigt wird.

## Beschreibung

Die vorliegende Erfindung bezieht sich auf eine Vorrichtung und ein Verfahren zum Herstellen von Kunststoffbehältnissen. Derartige Vorrichtungen und Verfahren sind aus dem Stand der Technik seit langem bekannt. Üblicherweise werden zur Herstellung von Kunststoffbehältnissen Kunststoffvorformlinge verwendet, die zunächst erwärmt und anschließend durch Beaufschlagung mit einem fließfähigen Medium, beispielsweise Druckluft zu Behältnissen wie Kunststoffflaschen expandiert werden.

In jüngerer Zeit wird zunehmend dazu übergegangen, als Material für diese Kunststoffvorformlinge auch Rezyklat bzw. anteilsweise rezykliertes Material zu verwenden. Dies führt jedoch oftmals zu einer schlechteren und insbesondere inhomogeneren Qualität der Kunststoffvorformlinge. So kann das Material beispielsweise dunklere Einschlüsse aufweisen, welche in einer Erwärmungseinrichtung wie einer Infrarot-Erwärmungseinrichtung stärker erwärmt werden. Dies kann bei der Herstellung der Behältnisse zu erheblichen Problemen führen. So können dunklere Bereiche in einen Infrarotofen stärker erwärmt werden und diese Bereiche und das umgebende Material werden daher nachfolgend in einer Blasmaschine stärker verstreckt, was zu starken Inhomogenitäten und beispielsweise auch zu Behältnisplatzern führen kann.

Aus der WO 2020/177982 A1 ist ein Verfahren zur Produktführung in einer Streckblasmaschine bekannt. Die WO 2012/001414 A2 beschreibt eine Vorrichtung und ein Verfahren zum Inspizieren von Kunststoffvorformlingen.

Daher ist es im Stand der Technik bekannt, dass diese Kunststoffvorformlinge inspiziert werden. Dabei werden Kunststoffvorformlinge, die nicht den Qualitätskriterien entsprechen, aussortiert. Insbesondere seit immer mehr Rezyklat eingesetzt wird, gewinnt beispielsweise die Detektion von sogenannten Black Specs im Kunststoffvorformling, also von verkohltem Fremdmaterial immer mehr an Bedeutung.

Im Stand der Technik wird der Grundkörper des Kunststoffvorformlings inspiziert und anhand des Inspektionsergebnisses entschieden, ob der Kunststoffvorformling ausgeschlossen werden soll. Dies führt jedoch teilweise zu einem relativ hohen Grad an Aussortierung. Wenn der Kunststoffvorformling zu einer Flasche geblasen wird, erhitzt sich an einer Stelle mit einer dunklen Verunreinigung des Materials dieser in dem Infrarotheizmodul stärker und es ergibt sich, wie oben erwähnt, eine Dünnstelle bis hin zu einem Loch in dem Behältnis.

Der vorliegenden Erfindung liegt daher die Aufgabe zugrunde, den Ausschuss derartiger Kunststoffvorformlinge zu senken. Dies wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zur Evaluierung von Kunststoffvorformlingen, wobei diese Kunststoffvorformlinge dazu bestimmt sind, von einer Erwärmungseinrichtung erwärmt zu werden und anschließend von einer Umformungseinrichtung durch Beaufschlagung mit einem fließfähigen Medium zu den Kunststoffbehältnissen expandiert zu werden erstrecken sich diese Kunststoffvorformlinge in einer Längsrichtung und weisen in dieser Längsrichtung mehrere Abschnitte auf, wobei diese mehreren Abschnitte zumindest einen Gewindeabschnitt und/oder Mündungsabschnitt, einen Grundkörperabschnitt und einem Bodenabschnitt aufweisen. Dabei werden wenigstens der Grundkörperabschnitt und der Bodenabschnitt inspiziert.

Erfindungsgemäß werden für eine Materialqualität der Kunststoffvorformlinge charakteristische Werte ausgegeben und diese Werte werden unterschiedlichen Abschnitten zugeordnet und/oder sind auch für unterschiedliche Abschnitte des Kunststoffvorformlings charakteristisch. Zusätzlich oder alternativ wird bei der Auswertung dieser charakteristischen Werte wenigstens eine Eigenschaft des herzustellenden Behältnisses berücksichtigt.

Im Stand der Technik wurden bisher die Kunststoffvorformlinge einheitlich inspiziert und es wurde nicht nach den Abschnitten des Kunststoffvorformlings unterschieden.

Die Anmelderin hat jedoch herausgefunden, dass für die Auswirkungen einer dunklen Verunreinigung in dem Kunststoffvorformling nicht nur die Farbe und Größe der Verunreinigung entscheidend ist, sondern auch deren Position in dem Kunststoffvorformling. Das Risiko, dass sich in dem Behältnis eine unzulässig dünne Stelle oder ein Loch ergibt, steigt beim Blasvorgang nämlich mit den lokalen Verstreckungsgraden und ist damit in den Bereichen größer, in denen etwa das Behältnis in der Blasform platziert wird.

Der in der Regel besonders dünne Füßchenbereich des Behältnisses wird beispielsweise in der Regel aus dem Bereich des Kunststoffvorformlings gebildet, der sich unmittelbar über dem Boden des Kunststoffvorformlings befindet. In diesem Bereich detektierte Verunreinigungen können also sinnvollerweise schwerwiegender bewertet werden als Verunreinigungen in dem übrigen Grundkörper des Kunststoffvorformlings.

Die zweite Ausgestaltung der Erfindung schlägt daher vor bei der Auswertung der charakteristischen Werte und/oder bei der Beurteilung der Frage, ob ein bestimmter Kunststoffvorformling auszusortieren ist, auch wenigstens eine Eigenschaft des herzustellenden Behältnisses zu berücksichtigen.

Insbesondere handelt es sich bei dieser Eigenschaft des herzustellenden Behältnisses um eine geometrische Gestalt des herzustellenden Behältnisses insbesondere eine Gestalt eines Bodenbereichs und/oder Grundkörperbereichs des herzustellenden Behältnisses. So sind beispielsweise Behältnisse bekannt, die einen sog. Champagnerboden aufweisen, d.h. einen Boden der ohne Standfüße ausgebildet ist. Bei anderen Böden können zahlreiche Standfüße ausgebildet sein, welche daher auch zu Bereichen starker Verstreckung führen.

Jedoch auch die Grundkörper der zu fertigenden Behältnisse können in unterschiedlicher Weise ausgestaltet sein. So können diese Grundkörper beispielsweise Bereiche mit Rillen oder dergleichen aufweisen oder auch glatt sein.

Bei einem weiteren bevorzugten Verfahren handelt es sich bei der Eigenschaft des herzustellenden Behältnisses um eine gewünschte Wandungsdicke. So sind beispielsweise bei Mehrweg-Behältnissen die Wandungen des Behältnisses dicker ausgebildet als bei Einwegbehältnissen. Daneben sind bei manchen Gattungen an Behältnissen deren Böden dickwandiger ausgebildet als bei anderen Behältnissen. Bei einer derart dickwandigeren Ausgestaltung können ggfs. mehr Störstellen in Kauf genommen werden als bei einer dünnwandigeren Ausgestaltung.

Damit schlägt die Erfindung vor, neben der Art der Verunreinigung auch mit einfließen zu lassen, wo sich diese Verunreinigung befindet und/oder welches Behältnis hergestellt werden soll.

Insbesondere bei der derzeit geforderten Erhöhung der Rezyklatanteile mit abnehmender Rezyklatqualität (durch geringere Verfügbarkeit von hochqualitativem Postconsumer-Material) kommen die Vorteile der Erfindung zum Tragen. Durch diese nach Abschnitten bzw. nach Zonen gewichtete Bewertung von detektierten Verunreinigungen (oder auch durch die Berücksichtigung der Gestalt der zu fertigenden Behältnisse) kann eine Ausschleusung von unkritischeren Kunststoffvorformlingfehlern vermindert werden und die von kritischeren trotzdem durchgeführt werden.

Dies führt in der Summe zu einer geringeren Anzahl fehlerhaft geblasener Behältnisse bei gleichzeitiger Reduzierung der Ausschleusungsrate. Bei einem besonders bevorzugten Verfahren erfolgt die Expansion der Kunststoffvorformlinge durch eine Blasmaschine und insbesondere eine Streckblasmaschine. Bevorzugt ist der Kunststoffvorformling abgesehen von seiner Gewindemündung verschlossen. Der Bereich, aus dem später der Bodenabschnitt des Behältnisses entsteht ist bevorzugt auch ein Bodenabschnitt des Kunststoffvorformlings und insbesondere ein Bereich, der sich um den sogenannten Anspritzpunkt des Kunststoffvorformlings herum befindet.

Insbesondere handelt es sich bei dem Bodenabschnitt um denjenigen Bereich, der in einer Blasform in eine Bodenform dieser Blasform expandiert wird. Dieser Abschnitt ist, wie oben erwähnt besonders hohen Expansionen bzw. Dehnungen unterworfen.

Bei einem bevorzugten Verfahren erfolgt die Inspektion berührungslos. Besonders bevorzugt wird wenigstens ein Bild des Kunststoffvorformlings und/oder eines Abschnitts des Kunststoffvorformlings aufgenommen. Dabei ist es möglich, dass der Kunststoffvorformling in einem Durchlichtverfahren oder in einem Auflichtverfahren inspiziert wird.

Bei einem bevorzugten Verfahren wird mit wenigstens einer Bildaufnahmeeinrichtung wenigstens ein Bild des oder der zu inspizierenden Kunststoffvorformlinge aufgenommen.

Bei einem weiteren bevorzugten Verfahren werden die zu inspizierenden Kunststoffvorformlinge von einer Beleuchtungseinrichtung beleuchtet. Diese Beleuchtungseinrichtung kann dabei UV Licht, Licht im sichtbaren Wellenlängenbereich und/oder Licht im (nah)infraroten Wellenlängenbereich ausgeben.

Bei einem weiteren bevorzugten Verfahren werden die zu inspizierenden Kunststoffvorformlinge mittels Wärmebildkamera insbesondere nach dem erwärmen inspiziert.

Bei einem bevorzugten Verfahren sind die für die Materialqualität charakteristischen Werte aus einer Gruppe von Werten ausgewählt, welche Verunreinigungen des Materials der Kunststoffvorformlinge, Größen der Verunreinigungen des Materials, eine Verteilung der Verunreinigungen des Materials über dessen Oberfläche, eine Dichte der Verunreinigungen des Materials über dessen Oberfläche, Dicke-Schwankungen eines Materials der Kunststoffvorformlinge, Dichte-Schwankungen des Materials der Kunststoffvorformlinge, farbliche Eigenschaften des Materials der Kunststoffvorformlinge und dergleichen enthält.

Wie oben erwähnt, werden dabei die Verunreinigungen sowohl in einem Grundkörperabschnitt des Kunststoffvorformlings als auch in einem Bodenabschnitt des Kunststoffvorformlings ermittelt und/oder ausgewertet. Besonders bevorzugt werden jedoch derartige Verunreinigungen, die in einem Grundkörperabschnitt auftreten, anders beurteilt als Verunreinigungen, die in dem Bodenabschnitt des Grundkörpers bzw. des Kunststoffvorformlings auftreten.

So kann etwa eine Anzahl und Größe von Verunreinigungen in dem Grundkörper im Rahmen der Beurteilung des Kunststoffvorformlings zu anderen Ergebnissen führen (etwa zu einer Ausschleusung oder einer Weiterbehandlung) als eine vergleichbare oder gleiche Dichte oder Anzahl von Verunreinigungen in einem Bodenabschnitt. Während die Anzahl der Verunreinigungen in einen Grundkörper noch dazu führen kann, dass der betreffende Kunststoffvorformling als gut und damit weiterverarbeitbar beurteilt wird, kann die gleiche Anzahl bzw. Dichte von Verunreinigungen in dem Bodenabschnitt des Kunststoffvorformlings dazu führen, dass dieser als unbrauchbar beurteilt wird und entsprechend ausgeschleust wird.

Bei einem bevorzugten Verfahren erfolgt damit eine zonenweise bzw. abschnittsweise Beurteilung der Materialeigenschaften. In dem hier gezeigten Beispiel wurde erwähnt, dass der Kunststoffvorformling in zwei Abschnitte unterteilt wird, nämlich einerseits einen Grundkörperabschnitt und andererseits einen Bodenabschnitt. Es wäre jedoch auch denkbar, diese Aufteilung noch feiner zu gestalten und beispielsweise einen Bereich des Kunststoffvorformlings unmittelbar um dessen Anspritzpunkt herum anders zu beurteilen als weitere Bodenbereiche des Kunststoffvorformlings und auch unterschiedlich als Bereiche des Grundkörpers.

Auch der Grundkörper könnte noch in Unterabschnitte unterteilt werden, beispielsweise einen Unterabschnitt, der unmittelbar unterhalb eines Tragrings des Kunststoffvorformlings liegt und in andere Bereiche. Auch können derartige Unterscheidungen oder Abschnitte in Abhängigkeit davon gewählt werden, welche Art Behältnis erzeugt wird. So kann beispielsweise die Beurteilung des Bodenabschnitts auch abhängig davon gemacht werden, wie aufwendig oder wie genau der Boden ausgestaltet ist. Falls es sich beispielsweise bei dem Boden um einen sogenannten Champagnerboden handelt, kann der Bodenabschnitt anders bewertet werden, als wenn ein Behältnis mit einer Vielzahl von Standfüßen erzeugt wird.

Besonders bevorzugt wird daher bei der Inspektion und/oder der Beurteilung der Materialeigenschaften auch das konkret herzustellende Behältnis berücksichtigt. Auch kann etwa ein Volumen des herzustellenden Behältnisses berücksichtigt werden. Auch können Parameter des Umformungsvorgangs für die Inspektion oder die Auswertung des Inspektionsergebnisses berücksichtigt werden.

Bei einem weiteren bevorzugten Verfahren wird wenigstens ein charakteristischer Wert bestimmt, der für den Grundkörperabschnitt der Kunststoffvorformlinge charakteristisch ist und/oder es wird wenigstens ein charakteristischer Wert bestimmt, der für den Bodenabschnitt und/oder einen Wandabschnitt der Kunststoffvorformlinge charakteristisch ist. Hinsichtlich des Wandabschnitts der Kunststoffvorformlinge ist zu berücksichtigen, dass teilweise in Behältnissen in den Umfangswandungen Stützringe ausgebildet sind, welche ebenfalls sensible Bereiche bei der Blasformung darstellen können.

So kann beispielsweise ein Wert bestimmt werden, der für eine Anzahl oder Dichte der Verunreinigungen in dem Grundkörperabschnitt charakteristisch ist und ein weiterer Wert, der für eine Dichte oder Anzahl der Verunreinigungen in dem Bodenabschnitt charakteristisch ist. Bevorzugt werden diese Werte berücksichtigt, um zu entscheiden, ob der betreffende Kunststoffvorformling auszuschleusen ist. Bevorzugt wird getrennt geprüft, ob der Grundkörperabschnitt noch vorgegebenen Sollkriterien entspricht, und/oder ob der Bodenabschnitt vorgegebenen Sollkriterien entspricht. Diese Sollkriterien können dabei bevorzugt unterschiedlich gewählt werden.

Bei einem weiteren bevorzugten Verfahren wird der Grundkörper der Kunststoffvorformlinge inspiziert und ein für diesen Grundkörperabschnitt charakteristischer Wert ausgegeben. Weiterhin wird bevorzugt der Bodenabschnitt der Kunststoffvorformlinge inspiziert und ein Wert ausgegeben, der für diesen Bodenabschnitt charakteristisch ist. Bei einem weiteren bevorzugten Verfahren wird sowohl für den Grundkörperabschnitt als auch für den Bodenabschnitt jeweils und bevorzugt getrennt bewertet, ob diese noch bestimmten Sollkriterien entsprechen. Bevorzugt werden diese Kriterien für den Grundkörperabschnitt des Kunststoffvorformlings und den Bodenabschnitt des Kunststoffvorformlings unterschiedlich gewählt.

Bei einem bevorzugten Verfahren werden die Kunststoffvorformlinge entlang eines vorgegebenen Transportpfads transportiert, und während dieses Transports inspiziert. Bei diesem vorgeschlagenen Verfahren wird die Inspektion gewissermaßen online und bevorzugt im laufenden Betrieb vorgenommen. Bei diesem Verfahren wird jeder Kunststoffvorformling individuell inspiziert. Es wäre jedoch auch möglich, eine Inspektion der Kunststoffvorformlinge außerhalb des Betriebs vorzunehmen, beispielsweise in einer separaten Anlage oder einer separaten Einrichtung. Daraufhin wäre es möglich, Kunststoffvorformlinge bereits auszuschleusen bzw. nicht erst in den Produktionsbetrieb gelangen zu lassen. Bevorzugt wird jedoch eine Inlineinspektion vorgeschlagen.

Bei einem weiteren bevorzugten Verfahren werden die Kunststoffvorformlinge entlang eines vorgegebenen Transportpfads transportiert und während dieses Transports inspiziert.

Besonders bevorzugt wird lediglich der zu verstreckende Teil der Preform zur Weiterverarbeitung beurteilt.

Bei einem weiteren bevorzugten Verfahren weisen die Kunststoffvorformlinge einen vorgegebenen Anteil an recyceltem Material auf. Bevorzugt ist dieser Anteil höher als 10%, bevorzugt höher als 20% und bevorzugt höher als 30% und besonders bevorzugt höher als 40%.

Bei einem bevorzugten Verfahren werden die Kunststoffvorformlinge nach ihrer Inspektion erwärmt und insbesondere auch nach ihrer Erwärmung expandiert. Bei diesem Verfahren erfolgt die Inspektion bevorzugt stromaufwärts einer Erwärmungseinrichtung, beispielsweise vor einem Sägezahnstern, der die Kunststoffvorformlinge eintaktet um sich so den Erwärmungsprozess zuzuführen.

Bei einem bevorzugten Verfahren wird ein Anteil der Kunststoffvorformlinge vor ihrer Expansion und insbesondere nach ihrer Erwärmung ausgeschleust. Es wäre jedoch auch möglich, dass das Ausschleusen noch vor der Erwärmung erfolgt. Falls beispielsweise festgestellt wird, dass ein bestimmter Kunststoffvorformling nicht den vorgegebenen Kriterien genügt, weil er in seinem Grundkörperabschnitt oder seinem Bodenabschnitt etwa eine Anzahl oder eine Dichte von Verunreinigungen aufweist, die vorgegebenen Kriterien nicht mehr genügen, kann dieser spezielle Kunststoffvorformling ausgeschleust werden.

Bei einem bevorzugten Verfahren erfolgt diese Ausschleusung nach der Erwärmung der Kunststoffvorformlinge, da ein Ausschleusen bzw. ein Erzeugen von Lücken in dem Ofen oftmals auch zu Nachteilen der benachbarten Kunststoffvorformlinge führt. Es wäre jedoch auch möglich, die betreffenden Kunststoffvorformlinge bereits vor der Erwärmung auszuschleusen, insbesondere wenn anschließend wieder die entstehenden Lücken geschlossen werden. So ist es möglich, einzelne Kunststoffvorformlinge bereits auszuschleusen, bevor diese in einen Eintaktstern einer entsprechenden Anlage gelangen.

Bei einem weiteren bevorzugten Verfahren erfolgt eine Ausschleusung unter Berücksichtigung wenigstens eines der Werte und besonders bevorzugt erfolgt die Ausschleusung sowohl unter Berücksichtigung wenigstens eines der Werte als auch unter Berücksichtigung des Abschnitts, in dem dieser Wert ermittelt wurde.

So ist es möglich, dass für den Grundkörperabschnitt ein erstes Toleranzfenster definiert wird und für den Bodenabschnitt ein zweites Toleranzfenster. Weiterhin ist es möglich, dass wie oben erwähnt, für den Grundkörperabschnitt ein höheres Maß an Fehlern erlaubt ist bzw. das Toleranzfenster eine höhere Art oder Anzahl an Fehlern erlaubt. Besonders bevorzugt ist es möglich, sowohl die Größe von Störstellen oder Fremdkörpern zu bestimmen als auch eine Dichte bezogen auf einen Flächenabschnitt.

Bei einem bevorzugten Verfahren wird im Rahmen der Inspektion wenigstens ein Bild eines zu inspizierenden Kunststoffvorformlings aufgenommen. Bei einem bevorzugten Verfahren werden die aufgenommenen Bilder ausgewertet und insbesondere hinsichtlich von Störstellen ausgewertet. So ist es möglich, dass ein Bild dahingehend ausgewählt wird, wie viele Störstellen oder Verunreinigungen beispielsweise pro Flächeneinheit auftreten. In Abhängigkeit von diesem Wert kann entschieden werden, ob der entsprechende Kunststoffvorformling ausgeschleust wird oder nicht.

Bei einem weiteren bevorzugten Verfahren erfolgt eine Inspektion der Kunststoffvorformlinge vor deren Erwärmung.

Bei einem weiteren bevorzugten Verfahren handelt es sich bei dem Kunststoffvorformlingen um für sichtbares Licht transparente Kunststoffvorformlinge.

Die vorliegende Erfindung ist weiterhin auf eine Vorrichtung zum Herstellen von Kunststoffbehältnissen gerichtet. Diese Vorrichtung weist eine Erwärmungseinrichtung auf, welche Kunststoffvorformlinge erwärmt, wobei diese Erwärmungseinrichtung eine Transporteinrichtung aufweist, welche die Kunststoffvorformlinge entlang eines vorgegebenen Transportpfads transportiert und eine Umformungseinrichtung, welche die von der Erwärmungseinrichtung erwärmten Kunststoffvorformlinge durch Beaufschlagung mit einem fließfähigen Medium zu den Kunststoffbehältnissen expandiert, wobei die Kunststoffvorformlinge sich in einer Längsrichtung erstrecken und in dieser Längsrichtung mehrere Abschnitte aufweisen, wobei diese mehreren Abschnitte zumindest einen Gewindeabschnitt und/oder Mündungsabschnitt, einen Grundkörperabschnitt und einen Bodenabschnitt aufweisen. Weiterhin weist die Vorrichtung eine Inspektionseinrichtung auf, welche dazu geeignet ist, wenigstens den Grundkörper und den Bodenabschnitt der Kunststoffvorformlinge zu inspizieren, wobei die Inspektionseinrichtung dazu geeignet und bestimmt ist, Werte auszugeben, die für eine Materialqualität der Kunststoffvorformlinge charakteristisch sind.

Bevorzugt sind diese Werte unterschiedlichen Abschnitten der Kunststoffvorformlinge zuordenbar. Insbesondere sind diese Werte dem Grundkörperabschnitt und/oder dem Bodenabschnitt der Kunststoffvorformlinge zuordenbar.

Daher wird auch vorrichtungsseitig vorgeschlagen, dass eine Auswertung der Werte oder eine Werteaufnahme auch in Abhängigkeit von dem jeweiligen Abschnitt des Kunststoffvorformlings, in dem die Werte aufgenommen werden erfolgt.

Bevorzugt weist die Vorrichtung eine Ausschleuseeinrichtung auf, welche dazu geeignet und bestimmt ist, Kunststoffvorformlinge unter Berücksichtigung wenigstens eines dieser Werte auszuschleusen.

Bei einer weiteren erfindungsgemäßen Ausgestaltung weist die Vorrichtung eine Ausschleuseeinrichtung auf, welche dazu geeignet und bestimmt ist, Kunststoffvorformlinge unter Berücksichtigung wenigstens eines dieser Werte auszuschleusen, wobei diese Ausschleuseeinrichtung auch wenigstens einen Wert berücksichtigt, der für die verwendeten Kunststoffvorformlinge und/oder die herzustellenden Behältnisse charakteristisch ist.

Wie oben erwähnt, ist es bei der Herstellung relevant zu wissen, in welchen Bereichen sich Störstellen befinden. Bei bestimmten Behältnisgattungen sind insbesondere die Böden der Behältnisse besonders sensibel, insbesondere Petaloidböden. Daher ist für derartige Behältnisse nur eine geringere Toleranz von Störstellen erlaubt. Andere Behältnisse, beispielsweise Behältnisse mit sogenannten Champagnerböden sind hingegen weniger kritisch, sodass auch mehr Störstellen erlaubt werden.

Auch bei Behältnissen, die mit einem sogenannten Heißfüllverfahren befüllt werden, ist das Auftreten von Fehlern, Verunreinigungen oder Störstellen weniger kritisch, da diese Behältnisse üblicherweise dickwandiger sind. Besonders bevorzugt handelt es sich bei den für das Behältnis wesentlichen Kriterien um eine geometrische Gestalt eines Bodenabschnitts des Behältnisses, eine geometrische Gestalt des Grundkörpers bzw. der Seitenwandungen des Behältnisses, eine geometrische Gestalt des Mündungsbereiches der herzustellenden Behältnisse, eine erwünschte Wandungsdicke der Behältnisse, eine Information, ob es sich bei den Behältnissen um Einweg- oder Mehrwegbehältnisse handelt und dergleichen.

Bei einer bevorzugten Ausführungsform ist die Ausschleuseeinrichtung dazu geeignet und bestimmt, Kunststoffvorformlinge unter Berücksichtigung eines ersten Werts, der für eine Materialqualität in dem Grundkörperabschnitt charakteristisch ist, auszuschleusen und/oder die Ausschleuseeinrichtung dazu geeignet und bestimmt ist, Kunststoffvorformlinge unter Berücksichtigung eines ersten Werts, der für eine Materialqualität in dem Bodenabschnitt des Behältnisses charakteristisch ist, auszuschleusen.

Bevorzugt ist die Ausschleuseeinrichtung nach der Erwärmungseinrichtung und besonders bevorzugt vor der Umformungseinrichtung angeordnet. Bei einer weiteren vorteilhaften Ausführungsform ist die Inspektionseinrichtung vor der Erwärmungseinrichtung angeordnet.

Besonders bevorzugt weist die Vorrichtung eine Steuerungseinrichtung auf, welche die Ausschleuseeinrichtung ansteuert und insbesondere derart ansteuert, dass Behältnisse bzw. Kunststoffvorformlinge ausgeschleust werden oder nicht. Besonders bevorzugt steuert die Steuerungseinrichtung die Ausschleuseeinrichtung auf Basis von Werten, welche charakteristisch für Materialeigenschaften des inspizierten Kunststoffvorformlings sind. Besonders bevorzugt steuert die Steuerungseinrichtung die Ausschleuseeinrichtung auch auf Basis von Werten, welche charakteristisch sind für einen inspizierten Abschnitt des Kunststoffvorformlings.

Besonders bevorzugt steuert die Steuerungseinrichtung die Ausschleuseeinrichtung auf Werten, welche für wenigstens eine Eigenschaft des herzustellenden Behältnisses und/oder wenigstens eine Eigenschaft einer Blasform der Blasformmaschine charakteristisch sind.

Weiterhin wäre es auch denkbar, in dem Grundkörper Unterabschnitte zu bilden, für welche unterschiedliche Toleranzen hinsichtlich von Materialeigenschaften gewählt werden. So können beispielsweise bei der Herstellung von Kunststoffvorformlingen bestimmte Abschnitte des Kunststoffvorformlings stärker erwärmt und auch stärker gedehnt werden als andere Abschnitte. Bei derartigen Abschnitten des Grundkörpers wäre es möglich, nur eine geringere Toleranz hinsichtlich der Materialeigenschaften zuzulassen. Dies ist insbesondere bei der Herstellung von Behältnissen vorteilhaft, welche einen von einem kreisförmigen Querschnitt abweichenden Querschnitt aufweisen.

Weitere Vorteile und Ausführungsformen ergeben sich aus der beigefügten Figur. Dabei zeigen:
- Fig. 1: eine Darstellung eines Behältnisses; und
- Fig. 2: eine Darstellung eines Kunststoffvorformlings aus dem das in Fig. 1 gezeigte Behältnis erzeugt wird.

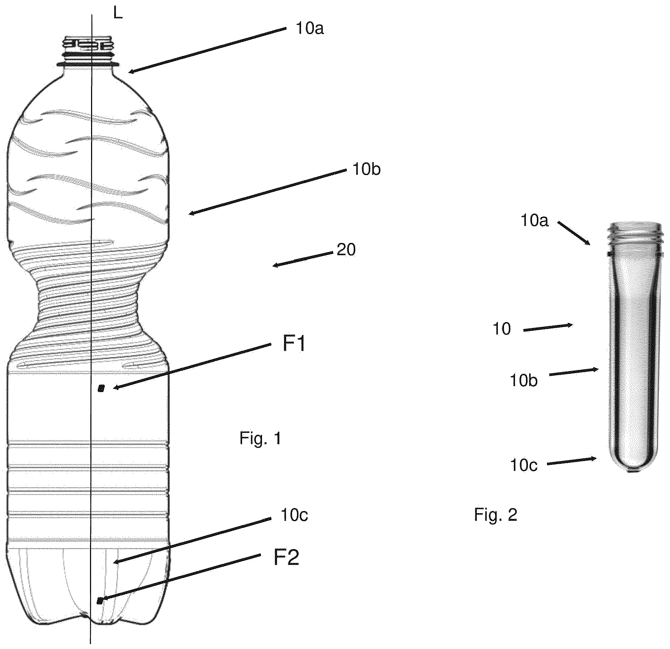

Fig. 1 zeigt eine Darstellung eines Behältnisses 20. Dieses weist eine Längsrichtung L auf sowie hier drei Abschnitte 10a, 10b, und 10c. Genauer gesagt handelt es sich hierbei um einem Mündungsabschnitt 10a, einen Grundkörperabschnitt 10b und einen Bodenabschnitt 10c.

Diese Abschnitte entsprechen den entsprechenden Abschnitten des in Fig. 2 gezeigten Kunststoffvorformlinge 10, aus welchem das Behältnis 20 durch einen Blasvorgang entsteht. Der Mündungsabschnitt 10a wird dabei bevorzugt nicht expandiert.

Das Bezugszeichen F1 kennzeichnet einen Fehler, wie etwa einen dunklen Punkt, der sich in dem Grundkörperabschnitt 10b befindet und das Bezugszeichen F2 kennzeichnet einen Fehler im Bereich des Bodenabschnitts 10c. Diese beiden Fehler F1 und 2 können sich unterschiedlich auswirken. So ist es denkbar, dass der Fehler F1 in dem Grundkörperabschnitt 10b noch nicht zu einem fehlerhaften Behältnis führt, wohingegen der Fehler F2 in dem Bodenabschnitt 10c zu einem fehlerhaften Behältnis führt. In diesem Fall sollte also ein Kunststoffvorformling mit dem Fehler F2 ausgeschleust werden, ein Kunststoffvorformlinge mit dem Fehler F1 hingegen nicht.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zur Evaluierung von Kunststoffvorformlingen (10), wobei diese Kunststoffvorformlinge dazu bestimmt sind, von einer Erwärmungseinrichtung erwärmt zu werden und anschließend von einer Umformungseinrichtung durch Beaufschlagung mit einem fließfähigen Medium zu Kunststoffbehältnissen expandiert zu werden, wobei die Kunststoffvorformlinge (10) sich in einer Längsrichtung erstrecken und in dieser Längsrichtung mehrere Abschnitte (10a, 10b, 10c) aufweisen, wobei diese mehreren Abschnitte zumindest einen Mündungsabschnitt (10a), einen Grundkörperabschnitt (10b) und einen Bodenabschnitt (10c) aufweisen, wobei wenigstens der Grundkörperabschnitt (10b) und der Bodenabschnitt (10c) inspiziert werden,
**dadurch gekennzeichnet, dass**
für eine Materialqualität der Kunststoffvorformlinge (10) charakteristische Werte ausgegeben werden wobei diese Werte unterschiedlichen Abschnitten (10a, 10b, 10b) zugeordnet werden und/oder wobei bei der Auswertung dieser charakteristischen Werte wenigstens eine Eigenschaft des herzustellenden Behältnisses berücksichtigt wird.

2. Verfahren nach Anspruch 1,
**dadurch gekennzeichnet, dass**
die für die Materialqualität charakteristischen Werte aus einer Gruppe von Werten ausgewählt sind, welche Verunreinigungen des Materials der Kunststoffvorformlinge, Größen der Verunreinigungen des Materials, eine Verteilung der Verunreinigungen des Materials über dessen Oberfläche, eine Dichte der Verunreinigungen des Materials über dessen Oberfläche, Dickeschwankungen eines Materials der Kunststoffvorformlinge, Dichteschwankungen eines Materials der Kunststoffvorformlinge, farbliche Eigenschaften des Material der Kunststoffvorformlinge und dergleichen enthält.

3. Verfahren nach wenigstens einem der vorangegangenen Ansprüche,
**dadurch gekennzeichnet, dass**
wenigstens ein charakteristischer Wert bestimmt wird, der für den Grundkörperabschnitt der Kunststoffvorformlinge charakteristisch ist und/oder wenigstens ein charakteristischer Wert bestimmt wird, der für den Bodenabschnitt oder einen Wandabschnitt der Kunststoffvorformlinge charakteristisch ist.

4. Verfahren nach wenigstens einem der vorangegangenen Ansprüche,
**dadurch gekennzeichnet, dass**
die Kunststoffvorformlinge entlang eines vorgegebenen Transportpfads transportiert werden und während dieses Transports inspiziert werden.

5. Verfahren nach wenigstens einem der vorangegangenen Ansprüche,
**dadurch gekennzeichnet, dass**
die Kunststoffvorformlinge wenigstens teilweise ein recyceltes Material aufweisen.

6. Verfahren nach wenigstens einem der vorangegangenen Ansprüche,
**dadurch gekennzeichnet, dass**
die Kunststoffvorformlinge nach ihrer Inspektion erwärmt und insbesondere nach ihrer Erwärmung expandiert werden.

7. Verfahren nach wenigstens einem der vorangegangenen Ansprüche,
**dadurch gekennzeichnet, dass**
ein Anteil der Kunststoffvorformlinge vor ihrer Expansion und insbesondere nach ihrer Erwärmung ausgeschleust wird.

8. Verfahren nach wenigstens einem der vorangegangenen Ansprüche,
**dadurch gekennzeichnet, dass**
eine Ausschleusung unter Berücksichtigung wenigstens eines der Werte erfolgt und bevorzugt die Ausschleusung sowohl unter Berücksichtigung der Werte als auch unter Berücksichtigung des Abschnitts, in dem dieser Wert ermittelt wurde, erfolgt.

9. Verfahren nach wenigstens einem der vorangegangenen Ansprüche,
**dadurch gekennzeichnet, dass**
eine Inspektion der Kunststoffvorformlinge vor deren Erwärmung erfolgt.

10. Vorrichtung (1) zum Herstellen von Kunststoffbehältnissen (15) mit einer Erwärmungseinrichtung (2), welche Kunststoffvorformlinge (10) erwärmt, wobei dieser Erwärmungseinrichtung (2) eine Transporteinrichtung aufweist, welche die Kunststoffvorformlinge entlang eines vorgegebenen Transportpfads transportiert sowie eine Umformungseinrichtung, welche die von der Erwärmungseinrichtung erwärmten Kunststoffvorformlinge durch Beaufschlagung mit einem fließfähigen Medium zu den Kunststoffbehältnissen (15) expandiert, wobei die Kunststoffvorformlinge (10) sich in einer Längsrichtung erstrecken und in dieser Längsrichtung mehrere Abschnitte (10a, 10b, 10c) aufweisen, wobei diese mehreren Abschnitte zumindest einen Mündungsabschnitt (10a), einen Grundkörperabschnitt (10b) und einen Bodenabschnitt (10c) aufweisen und mit wenigstens einer Inspektionseinrichtung, welche dazu geeignet ist wenigstens den Grundkörper (10b) und den Bodenabschnitt (10c) der Kunststoffvorformlinge zu inspizieren, wobei die Inspektionseinrichtung dazu geeignet und bestimmt ist, Werte auszugeben, die für eine Materialqualität der Kunststoffvorformlinge charakteristisch ist,
**dadurch gekennzeichnet, dass**
diese Werte unterschiedlichen Abschnitten der Kunststoffvorformlinge (10) zuordenbar sind und/oder die Vorrichtung eine Ausschleuseeinrichtung aufweist, welche dazu geeignet und bestimmt ist, Kunststoffvorformlinge unter Berücksichtigung wenigstens eines dieser Werte auszuschleusen, wobei diese Ausschleuseeinrichtung auch wenigstens einen Wert berücksichtigt, der für die verwendeten Kunststoffvorformlinge und/oder die herzustellenden Behältnisse charakteristisch ist.

11. Vorrichtung (1) nach dem vorangegangenen Anspruch,
**dadurch gekennzeichnet, dass**
die Vorrichtung (1) eine Ausschleuseeinrichtung aufweist, welche dazu geeignet und bestimmt ist, Kunststoffvorformlinge unter Berücksichtigung wenigstens eines dieser Werte auszuschleusen.

12. Vorrichtung (1) nach dem vorangegangenen Anspruch,
**dadurch gekennzeichnet, dass**
die Ausschleuseeinrichtung dazu geeignet ist, Kunststoffvorformlinge unter Berücksichtigung eines ersten Wertes, der für eine Materialqualität in dem Grundkörperabschnitt charakteristisch ist auszuschleusen und/oder die Ausschleuseeinrichtung dazu geeignet ist, Kunststoffvorformlinge unter Berücksichtigung eines ersten Wertes, der für eine Materialqualität in dem Bodenabschnittabschnitt charakteristisch ist auszuschleusen.
